# EUROPÄISCHE PATENTSCHRIFT

(11) **EP 0 427 149 B1**
(45) Veröffentlichungstag und Bekanntmachung des Hinweises auf die Patenterteilung: **08.12.1993**
(21) Anmeldenummer: 90121063.3
(22) Anmeldetag: 02.11.1990
(51) Int. Cl.: A01B 59/043

(54) **Vorrichtung zum Anbau einer Landmaschine an einen Dreipunktbock**
Device for connecting an agricultural machine to a three-point linkage
Dispositif pour la connexion d'une machine agricole à un attelage en trois points

(30) Priorität: 09.11.1989 DE 3937242
(43) Veröffentlichungstag der Anmeldung: 15.05.1991
(73) Patentinhaber: Fella-Werke GmbH, D-90537 Feucht (DE)
(72) Erfinder: Pürrer, Josef, D - 8501 Feucht (DE); Kohl, Bernhard, D - 8501 Winkelhaid (DE); Nickl, Karl, D - 8458 Berg (DE)
(74) Vertreter: Matschkur, Götz, Lindner Patent- und Rechtsanwälte

(56) Entgegenhaltungen:
- DE-A- 2 931 656
- DE-A- 3 601 354
- DE-B- 1 632 776
- FR-A- 2 379 242
- FR-A- 2 434 549
- FR-A- 2 454 255
- FR-A- 2 587 580

## Beschreibung

Die Erfindung richtet sich auf eine Landmaschine bestehend aus einem Maschinenrahmen (5), aus einem Unterlenkeranschlüsse (2) und einen Oberlenkeranschluß aufweisenden Dreipunktbock (1) für die Anhängung der Landmaschine an einer Dreipunktaufhängung eines Schleppers, und aus einer um eine Querachse (12) und eine Vertikalachse (16) gegenüber dem Dreipunktbock (1) schwenkbaren am Maschinenrahmen befestigten Zugstrebe (7), wie auch zwei längenveränderlichen Stabilisierungsstreben (23, 24), die im seitlichen Abstand nebeneinander am Maschinenrahmen (5) angreifen.

Die Ausrüstung der heute gebräuchlichen Schlepper mit einer Dreipunkt-Hydraulik am Heck gestattet es, landwirtschaftliche Geräte und Maschinen räumlich dicht an den Schlepper anzubauen und diese Geräte mit Hilfe der vom Schlepper aus zu betätigenden Dreipunkthydraulik aus der Arbeitsstellung in die ausgehobene Transportstellung problemlos zu überführen. Bei verschiedenen Arbeitsgeräten erwies sich jedoch der ursprünglich starre Anbau der Geräte an die Dreipunkthydraulik vor allem beim Kurvenfahren als wenig praktikabel. Dies um so mehr, je größer die Arbeitsbreite der Geräte ist. Um diesen Nachteil zu beheben, wurde eine bewegliche Verbindung zwischen dem Dreipunktbock und dem Maschinenrahmen geschaffen. Hierbei weist das Arbeitsgerät im allgemeinen eine Zugstrebe auf, welche um eine vertikale Achse beweglich am Dreipunktbock angelenkt ist. Zum Transport wird das Arbeitsgerät durch Hochschwenken des Dreipunktrahmens ausgehoben. Dadurch kippt die senkrechte Achse nach vorne. Da gleichzeitig der Schwerpunkt des Arbeitsgeräts angehoben wird, wird dessen Mittelstellung instabil. Besonders, wenn der Schlepper beim Transport bergabfährt, besteht die Gefahr, daß das Arbeitsgerät nach vorne schiebt und dabei um die senkrechte Achse auf eine Seite kippt. Ein Beispiel für eine derartige Anordnung zeigt die FR.-Pat. Anm. 25 87 580. Sie offenbart eine Schabevorrichtung mit kipparer Schaufel zum Anhängen an das Dreipunktsystem eines Schleppers. Die Unterlenkeranschlüsse des Dreipunktsystems sind dabei durch eine Stange miteinander verbunden. Diese Stange weist mehrere Bohrungen auf, wobei die Zugstrebe, die die Stange mittels zweier Platten über- und untergreift, durch einen Bolzen in einer dieser Bohrungen eingehängt und um die senkrechte Bolzenachse drehbar ist . An der oberen dieser Platten ist ein Kraftbein lotrecht sowie starr befestigt. Dessen anderes Ende ist über ein Kugelgelenk mit dem Oberlenkeranschluß verbunden. Die Zugstrebe weist U-Form auf, deren Schenkelenden an den Außenseiten der Schaufel gelenkig befestigt sind. Von den selben Anlenkungspunkten führt je ein Holm zum oberen Ende des Kraftbeins. Aufgrund des in sich starren Kupplungsteils aus Zugstrebe, Kraftbein und Holmen ist die Zugstrebe ausschließlich um die senkrechte Achse des Kraftbeins schwenkbar. Zum Transport wird zwischen der Schaufel und dem Oberlenkeranschluß ein Zugseil eingehängt und schließlich das Dreipunktsystem des Schleppers angehoben. Eine Maßnahme zur seitlichen Stabilisierung der angehängten Schaufel während des Transports kann der FR-Pat. Anm. 25 87 580 nicht entnommen werden.

Um die Beweglichkeit des Arbeitsgeräts für Arbeiten in hügeligem Gelände zu erhöhen, weist, insbesondere bei Heuwendern und Schwadern, die Zugstrebe gegenüber dem Dreipunktbock zusätzlich eine Beweglichkeit um eine waagrechte Achse auf. Die Schwenkbewegung um die senkrechte Achse verleiht dem Gerät in der Arbeitsstellung, vor allem beim Kurvenfahren, ein Betriebsverhalten, welches demjenigen einer gezogenen Maschine entspricht. Beim Ausheben des Gerätes führt dieses, bedingt durch sein Gewicht, eine Schwenkbewegung um die waagerechte Achse aus, die durch einen Anschlag begrenzt ist. Um die Konstruktion möglichst einfach zu gestalten, ist in den meisten Fällen die horizontale Achse direkt zwischen den Unterlenkeranschlüssen an diesen drehbar gelagert und weist in ihrer Mitte eine um eine senkrechte Achse schwenkbare Anlenkung der Zugstrebe auf. Bei einer derartigen Anordnung ist die senkrechte Achse in der Transportstellung nach hinten gekippt, so daß durch das Gewicht der Arbeitsmaschine ihre Mittellage stabilisiert wird, solange der Schlepper sich auf ebenem Gelände befindet. Die Mittellage des Arbeitsgeräts ist jedoch nicht auch gegenüber einer seitlichen Neigung des Schleppers stabil, da in diesem Fall die senkrechte Achse zur Seite kippt. Die Vorrichtung zum Anbau der Arbeitsmaschine an den Dreipunktbock muß also ein zusätzliches Element zur Fixierung des Arbeitsgeräts in der Transportstellung aufweisen.

Hierfür eignet sich besonders eine mit einer Verzahnung versehene Kulisse, in die in einer bestimmten Schwenkstellung ein Bolzen als Gegenglied eingreift, so daß die Mittellage des Geräts beim Transport fixiert ist. Eine derartige Ausführungsform bei der Anhängung einer Landmaschine an den Dreipunktbock offenbart die DE-AS 16 32 776. Die Zugstrebe weist hier die Form einer Deichsel auf, die mit einem Zapfen in Höhe der Unterlenker der Dreipunktaufhängung in eine Verbindungsstange mit Zahnsegment eingreift. Zwei Seilzüge stellen eine Verbindung zwischen dem Maschinenrahmen und dem Dreipunktbock dar, an welchem sie in Höhe des Oberlenkers angreifen. Eine praktische Bedeutung hat diese Ausführungsform deshalb nicht erlangt, weil sie dem angehängten Gerät in der Transportstellung nicht zu der erforderlichen Stabilität der Aufhängung verhelfen konnte.

Eine Weiterentwicklung dieses Gedankens führte zu der Ausführungsform gemäß DE-OS 36 01 354. Auch hier ist das angehängte Gerät über eine Zugdeichsel mit dem Dreipunktbock verbunden. Der Angriffspunkt liegt in Höhe des Oberlenkers und ist so ausgebildet, daß die Zugdeichsel in zwei zueinander senkrechten Ebenen schwenkbar ist. In der Aushebe-oder Transportstellung wird das Gerät durch zwei seitliche Teleskopstreben stabilisiert, die zu den Unterlenkern führen. Diese Ausführungsform wird heute in großem Umfang verwendet. Bei Einsatz der Geräte auf weitgehend ebenen Flächen ist sie problemlos, bei der Arbeit in hügeligem Gelände besteht allerdings bei der Bergabfahrt die Gefahr des sogenannten Auflaufens. Diese Erscheinung ist bedingt durch den hohen Angriffspunkt der Zugstrebe an dem Dreipunktbock und dem demgegenüber tiefliegenden Schwerpunkt des Gerätes. Infolge der Bewegung an einem abfallenden Hang entsteht jedoch eine Kraftkomponente, die geeignet ist, den Dreipunktbock samt dem Dreipunktgestänge anzuheben. Diese Erscheinung wiederum führt in den Angriffspunkten am Dreipunktbock zu einer Blockierung des Gerätes, und außerdem verändert sich der Bodenabstand der Arbeitswerkzeuge in unkontrollierbarer Weise. Die Erfindung nimmt sich dieser Problematik an mit der Aufgabe, die dieser Art der Anhängung innewohnenden Vorteile beizubehalten, zugleich aber ihre Nachteile, die vor allem bei Arbeit im hügeligen Gelände in Erscheinung treten, auszuschalten.

Eine Lösung der vorliegenden Probleme konnte auch eine Anordnung nicht bieten, wie sie in der französischen Patentanmeldung 23 79 242 beschrieben ist. Bei dieser ist ein gesonderter Dreipunktbock überhaupt nicht vorhanden und die Stabilisierungsstreben greifen gemeinsam am Oberlenkeranschluß an.

Der Erfindung liegt daher die Aufgabe zugrunde, die gattungsgemäße Vorrichtung gemäß der DE-OS 36 01 354 derart weiterzubilden, daß in hügeligem Gelände eine auflaufende Maschine bei Bergabfahrt vermieden wird, wobei ein dadurch bedingtes Anheben des Dreipunktbockes und damit eine Veränderung des Bodenabstandes der Arbeitswerkzeuge in unerwünschter Weise nicht mehr erfolgen kann.

Zur Lösung dieser Aufgabe ist erfindungsgemäß vorgesehen, daß die Zugstrebe etwa in Höhe der Unterlenkeranschlüsse zwischen diesen, und die Stabilisierungsstreben etwa in Höhe des Oberlenkeranschlusses an dem Dreipunktbock in seitlichem Abstand voneinander angreifen.

Durch diese Maßnahme wird die gewünschte Beweglichkeit des Anbaus des Gerätes an dem Dreipunktbock beibehalten. Dadurch, daß jedoch der Angriffspunkt der Zugstrebe tiefergelegt wird, erlangt die Vorrichtung ein weitgehend besseres Betriebsverhalten, auch dann, wenn die Geräte zur Arbeit auf stark hügeligem Gelände herangezogen werden. Diese Vorzüge werden unter einem außerordentlich geringen konstruktiven Aufwand erreicht. Zur Gewährleistung der Seitenstabilität ist erforderlich, daß die Stabilisierungsstreben am Dreipunktbock mit einem ausreichenden seitlichen Abstand voneinander angreifen. Insbesondere dürfen sie nicht um eine gemeinsame Achse schwenkbar sein.

In weiterer Ausgestaltung der Erfindung ist zwischen den Unterlenkeranschlüssen ein Joch um eine Querachse schwenkbar am Dreipunktbock gelagert, welches einen in etwa vertikalen Zapfen zum Befestigen der Zugstrebe aufweist. Dadurch liegen die beiden Bewegbarkeiten praktisch in der gleichen Ebene etwa in Höhe der Unterlenkeranschlüsse, so daß auch bei starker Bergabfahrt keine auf ein Ausheben des Dreipunktbockes gerichtete Kraftkomponente in Erscheinung treten kann. Diese Wirkung wird noch dadurch verstärkt, daß nach einem weiteren Merkmal der Erfindung der Schwenkbereich des Joches, vorzugsweise nach oben, durch Anschläge begrenzt werden kann.

Es hat sich als besonders vorteilhaft erwiesen, das Joch aus zwei in Abstand übereinander angeordneten Platten zu bilden, zwischen denen eine Zugöse um den vertikalen Zapfen schwenkbar gelagert ist, an welcher die Zugstrebe befestigt ist. Die beiden Platten können gegebenenfalls auch Schenkel einer nach hinten offenen gabelförmigen Gestaltung sein, deren querverlaufende Schwenkachse etwa im Bereich des Ansatzes der beiden Gabelschenkel liegt. Um die Beweglichkeit der Anbauvorrichtung um die vertikale Achse einzuschränken, kann die Zugöse zwischen Reibbelägen eingespannt sein. Von besonderem Vorteil ist in diesem Zusammenhang, wenn der Zapfen mittels Federn zur verstellbaren Verspannung der Platten des Joches dient. In diesem Fall ist der Zapfen vorteilhaft als Schraubbolzen ausgebildet, zwischen dessen Kopf und Kontermutter einerseits und den beiden Platten des Joches Tellerfedern od. dgl. angeordnet sind. Hierdurch läßt sich eine leicht zu handhabende Verstellbarkeit der Verspannung der beiden Platten gegeneinander und damit eine jeweils gewünschte Einschränkung der Beweglichkeit der Zugdeichselanhängung erreichen.

In weiterer Ausgestaltung der Erfindung kann die Zugstrebe zwei gabelförmig von der Zugöse zum Maschinenrahmen divergierende Schenkel aufweisen. Auf diese Weise ergibt sich ein besonders robuster Aufbau.

Es liegt im Rahmen der Erfindung, daß der Dreipunktbock ein oberes Querjoch aufweist, an dessen Ende die beiden Stabilisierungsstreben befestigt sind, die vor allem bei ausgehobenem Gerät ein Pendeln um eine annähernd vertikale Achse verhindern. Besonders zweckmäßig ist die Verwendung von Teleskopgliedern als Stabilisierungsstreben. Diese können außerdem ihre Verlängerung begrenzende Anschläge aufweisen.

Weitere Merkmale, Einzelheiten und Vorteile der Erfindung ergeben sich aus der folgenden Beschreibung einer bevorzugten Ausführungsform der Erfindung sowie anhand der Zeichnung. Hierbei zeigen:
- Fig. 1: in perspektivischer Darstellung die Anbauvorrichtung nach der Erfindung, und zwar bei einem Zettwender und
- Fig. 2: ein Detail in vergrößertem Schnitt.

Der insgesamt mit 1 bezeichnete Dreipunktbock dient der Anhängung an die nicht dargestellte Dreipunkthydraulik des Schleppers. Deren Unterlenker greifen an den Anschlüssen 2 an. Der Oberlenker wird zwischen den beiden Platten 3 am oberen Querjoch 4 des Dreipunktbockes 1 befestigt.

Zum Anbau des Maschinenrahmens 5, dessen Arbeitskreisel bei 6 lediglich angedeutet sind, dient eine Zugstrebe 7, deren beide Schenkel 8 und 9 zum Maschinenrahmen 5 hin divergieren und an diesem befestigt sind. Das vordere Ende dieser Schenkel 8, 9 greift an einer flachen Zugöse 10 an, die an dem Joch 11 schwenkbar gelagert ist, welches seinerseits etwa in Höhe der Unterlenkeranschlüsse 2 um eine Schwenkachse 12 schwenkbar gelagert ist. Dieses Joch 11 besteht bei der in der Zeichnung wiedergegebenen Ausführungsform aus einer oberen Platte 13 und einer unteren Platte 14, deren Enden 15 die Schwenkachse 12 des Joches 11 weitgehend umschließen. Ein Zapfen 16 durchsetzt die beiden Platten 13, 14 innerhalb der beiden Buchsen 17 und verspannt die beiden Platten 13, 14 gegenüber der Zugöse 10. Zwischen den Platten 13, 14 und Zugöse 10 ist ein oberer und ein unterer Reibbelag 18 bzw. 19 angeordnet. Die Vorspannung erhält diese Anordnung durch Tellerfedern 20 zwischen dem Kopf 21 und der Kontermutter 22 einerseits sowie den Buchsen 17 andererseits. Diese Anordnung gestattet eine Verstellbarkeit der Vorspannung der beiden Platten 13 und 14 gegeneinander, um dadurch die Schwenkbewegung der Zugöse um den Zapfen 16 in einem gewünschten Maße einzuschränken.

Etwa im Bereich der Angriffspunkte der beiden Schenkel 8, 9 der Zugdeichsel 7 an den Maschinenrahmen 5 sind an diesem Stabilisierungsstreben 23 und 24 befestigt, die aus beispielsweise hydraulisch betriebenen Teleskopgliedern bestehen. Diese besitzen in den Teleskoprohren 29 angeordnete Anschläge, die ein zu starkes Einfahren der Kolbenstangen 25 bei Bergabfahrt verhindern. Das vordere Ende der Stabilisierungsstreben 23, 24 ist bei 26 an dem oberen Querjoch 4 des Dreipunktbockes 1 beweglich befestigt.

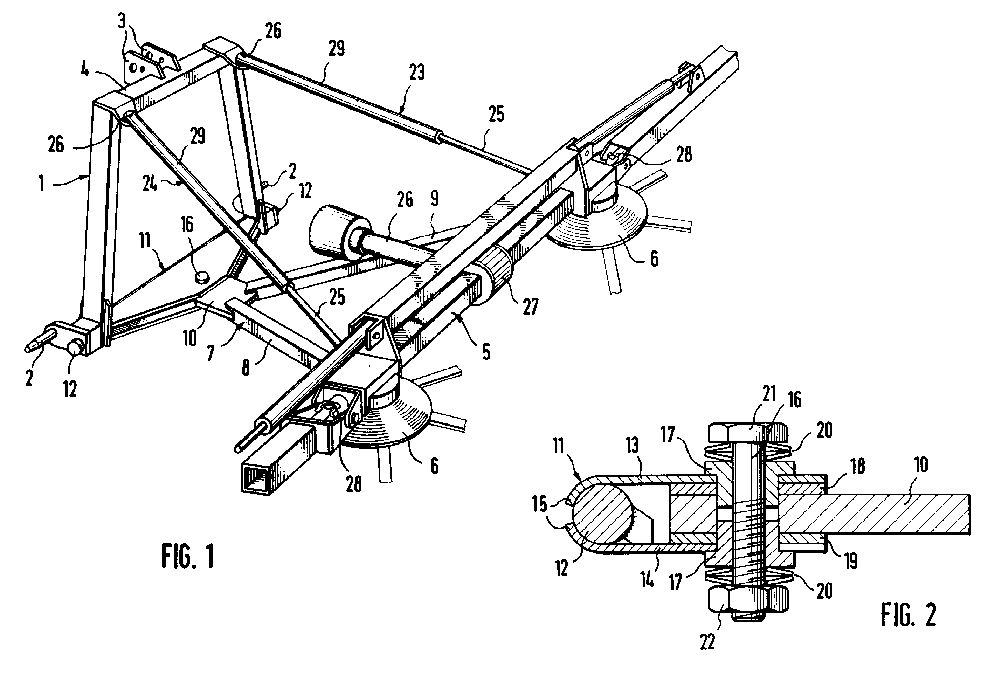

In der Fig. 1 ist die Arbeitsstellung der Maschine dargestellt, deren Arbeitskreisel 6 von der Zapfwelle 26 über ein Getriebe 27 und in dem Maschinenrahmen 5 liegende Antriebswellen und Kreuzgelenke 28 angetrieben werden. In dieser Arbeitsstellung liegt das Gewicht des Gerätes auf den hier nicht dargestellten Stützrädern unterhalb der Arbeitskreisel 6 auf, und das Gerät arbeitet nach Art einer vom Schlepper gezogenen Maschine. In dieser Eigenschaft kann es bei Kurvenfahrt um den Zapfen 16 Schwenkbewegung ausführen. Wird der Dreipunktbock 1 mit Hilfe der Schlepperhydraulik angehobenen, was der Transportstellung des angebauten Gerätes entspricht, so schwenkt die Maschine mit dem Joch 11 um die waagrechte Schwenkachse 12 infolge ihres Gewichtes soweit nach unten, bis die Kolbenstangen 25 der Teleskopglieder 23, 24 an den hier nicht dargestellten Anschlägen in den Teleskoprohren 29 zur Anlage gelangen. Dadurch wird das angebaute Gerät in einer zur Fahrtrichtung annähernd rechtwinkligen Lage gehalten. Sind die Teleskopglieder 23, 24, was nicht zwingend vorgeschrieben ist, als beispielsweise an die Schlepperhydraulik angeschlossene Hydraulikzylinder ausgebildet, so kann, um in der Transportstellung eine größere Bodenfreiheit der Maschine zu erzielen, diese durch Einziehen der Kolbenstangen 25 in die Teleskoprohre 29 zusätzlich angehoben werden. Diese Ausgestaltung läßt auch eine unterschiedliche Betätigung der Teleskopglieder 23, 24 in der Weise zu, daß z. B. das Teleskopglied 23 eingefahren, das Teleskopglied 24 hingegen ausgefahren wird oder umgekehrt. Die dadurch erzielbare Schrägstellung der Maschine um die Achse des Zapfens 16 kann verschiedene Arbeitsgänge, z. B. ein Randstreuen, begünstigen.

## Patentansprüche

1. Landmaschine bestehend aus einem Maschinenrahmen (5), aus einem Unterlenkeranschlüsse (2) und einen Oberlenkeranschluß (3) aufweisenden Dreipunkt-bock (1) für die Anhängung der Landmaschine an einer Dreipunktaufhängung eines Schleppers, und aus einer um eine Querachse (12) und eine Vertikalachse (16) gegenüber dem Dreipunktbock (1) schwenkbaren am Maschinenrahmen befestigten Zugstrebe (7), wie auch zwei längenveränderlichen Stabilisierungsstreben (23, 24), die im seitlichen Abstand nebeneinander am Maschinenrahmen (5) angreifen, dadurch gekennzeichnet, daß die Zugstrebe (7) etwa in Höhe der Unterlenkeranschlüsse (2) zwischen diesen, und die Stabilisierungsstreben (23, 24) etwa in Höhe des Oberlenkeranschlusses (3) an dem Dreipunktbock (1) in seitlichem Abstand voneinander angreifen.

2. Landmaschine nach Anspruch 1, dadurch gekennzeichnet, daß zwischen den Unterlenkeranschlüssen (2) ein Joch (11) um eine Querachse (12) schwenkbar am Dreipunktbock (1) gelagert ist, das einen etwa vertikalen Zapfen (16) zum Anlenken der Zugstrebe (7) aufweist.

3. Landmaschine nach Anspruch 1 oder 2, dadurch gekennzeichnet, daß der Schwenkbereich des Joches (11), vorzugsweise nach oben, durch Anschläge begrenzt ist.

4. Landmaschine nach wenigstens einem der Ansprüche 1 bis 3, dadurch gekennzeichnet, daß das Joch (11) zwei in Abstand übereinander angeordnete Platten (13/14) aufweist, zwischen denen eine Zugöse (10) um den vertikalen Zapfen (16) schwenkbar gelagert ist, an welcher die Zugstrebe (7) befestigt ist.

5. Landmaschine nach wenigstens einem der Ansprüche 1 bis 4, dadurch gekennzeichnet, daß die Zugöse (10) zwischen Reibbelägen (18, 19) eingespannt ist.

6. Landmaschine nach wenigstens einem der Ansprüche 1 bis 5, dadurch gekennzeichnet, daß der Zapfen (16) mittels Federn (20) zur verstellbaren Verspannung der Platten (13, 14) des Joches dient.

7. Landmaschine nach wenigstens einem der Ansprüche 1 bis 6, dadurch gekennzeichnet, daß die Zugstrebe (7) zwei gabelförmig von der Zugöse zum Maschinenrahmen hin divergierende Schenkel (8, 9) aufweist.

8. Landmaschine nach wenigstens einem der Ansprüche 1 bis 7, dadurch gekennzeichnet, daß der Dreipunktbock (1) ein oberes Querjoch (4) aufweist, an dessen Enden die beiden Stabilisierungsstreben (23, 24) befestigt sind.

9. Landmaschine nach wenigstens einem der Ansprüche 1 bis 8, dadurch gekennzeichnet, daß die Stabilisierungsstreben (23, 24) aus Teleskopgliedern (25, 29) bestehen.

10. Landmaschine nach wenigstens einem der Ansprüche 1 bis 9, dadurch gekennzeichnet, daß die Teleskopglieder (25, 29) eine Verlängerung begrenzende Anschläge aufweisen.

## Claims

1. Agricultural machine consisting of a machine frame (5), a three-point bracket (1) - having bottom link connexions (2) and a top link connexion (3) - for attaching the agricultural machine to a three-point suspension of a tractor, and of a drag strut (7) fixed to the machine frame so as to pivot relative to the three-point bracket about a transverse axle (12) and a vertical axle (16), and also comprising two length-adjustable stabilising struts (23, 24), which, spaced apart adjacent to one another, act on the machine frame (5), characterised in that the drag strut (7) acts on the three-point bracket (1) approximately at the level of the bottom-link connexions (2) and between these, and the stabilising struts (23, 24) act on the three-point bracket (1) laterally spaced apart, approximately at the level of the top-link connexion (3).

2. Agricultural machine according to claim 1, characterised in that between the bottom-link connexions (2), a yoke (11), which has a vertical journal (16) for coupling the drag strut (7), is mounted on the three-point bracket (1) so as to pivot about a transverse axle (12).

3. Agricultural machine according to claim 1 or 2, characterised in that the pivotal range of the yoke (11), preferably in the upward direction, is limited by stops.

4. Agricultural machine according to at least one of claims 1 to 3, characterised in that the yoke (11) has two plates (13/14) disposed one above another, spaced apart, between which a trailer coupling ring (10) is pivotably mounted about the vertical journal (16) to which the drag strut (7) is fixed.

5. Agricultural machine according to at least one of claims 1 to 4, characterised in that the trailer coupling ring (10) is braced between friction linings (18, 19).

6. Agricultural machine according to at least one of claims 1 to 5, characterised in that the journal (16) is for the adjustable bracing of the plates (13, 14) of the yoke by means of springs (20).

7. Agricultural machine according to at least one of claims 1 to 6, characterised in that the drag strut (7) has two arms (8, 9) diverging in a forked manner from the trailer coupling ring to the machine frame.

8. Agricultural machine according to at least one of claims 1 to 7, characterised in that the three-point bracket (1) has an upper transverse yoke (4), to the ends of which the two stabilising struts (23, 24) are fixed.

9. Agricultural machine according to at least one of claims 1 to 8, characterised in that the stabilising struts (23, 24) consist of telescopic members (25, 29).

10. Agricultural machine according to at least one of claims 1 to 9, characterised in that the telescopic members (25, 29) have stops defining an extension.

## Revendications

1. Machine agricole composée d'un châssis de machine (5), d'un support trois points (1) comportant des points d'attache de bras inférieurs (2) et un point d'attache de bras supérieur (3) pour la suspension de la machine agricole à un attelage trois points d'un tracteur, et d'un tirant (7) fixé sur le châssis de machine et pouvant pivoter par rapport au support trois points (1) autour d'un axe transversal (12) et d'un axe vertical (16), ainsi que de deux barres stabilisatrices (23, 24) de longueur variable, qui se raccordent au châssis de machine (5) en étant espacées latéralement l'une de l'autre, caractérisée en ce que le tirant (7) se raccorde au support trois points (1) sensiblement à la hauteur des points d'attache de bras inférieurs (2) et entre ceux-ci, les barres stabilisatrices (23, 24) se raccordant au support trois points (1), sensiblement à la hauteur du point d'attache de bras supérieur (3) en étant espacées latéralement l'une de l'autre.

2. Machine agricole selon la revendication 1, caractérisée en ce qu'entre les points d'attache de bras inférieurs (2), une traverse (11) est montée sur le support trois points (1), de manière à pouvoir pivoter autour d'un axe transversal (12), cette traverse comportant un tourillon sensiblement vertical (16) pour l'articulation du tirant (7).

3. Machine agricole selon la revendication 1 ou 2, caractérisée en ce que la plage de pivotement de la traverse (11) est limitée par des butées, de préférence vers le haut.

4. Machine agricole selon l'une au moins des revendications 1 à 3, caractérisée en ce que la traverse comprend deux plaques (13/14) disposées à distance l'une au-dessus de l'autre, entre lesquelles est monté pivotant autour du tourillon vertical (16), un anneau d'attelage (10) sur lequel est fixé le tirant (7).

5. Machine agricole selon l'une au moins des revendications 1 à 4, caractérisée en ce que l'anneau d'attelage (10) est serré entre des garnitures de friction (18, 19).

6. Machine agricole selon l'une au moins des revendications 1 à 5, caractérisée en ce que le tourillon (16), au moyen de ressorts (20), sert au serrage réglable des plaques (13, 14) de la traverse.

7. Machine agricole selon l'une au moins des revendications 1 à 6, caractérisée en ce que le tirant (7) comporte deux branches (8, 9) qui divergent à la manière d'une fourche, de l'anneau d'attelage en direction du châssis de machine.

8. Machine agricole selon l'une au moins des revendications 1 à 7, caractérisée en ce que le support trois points (1) comporte une traverse transversale supérieure (4), aux extrémités de laquelle sont fixées les deux barres stabilisatrices (23, 24).

9. Machine agricole selon l'une au moins des revendications 1 à 8, caractérisée en ce que les barres stabilisatrices (23, 24) sont constituées d'organes télescopiques (25, 29).

10. Machine agricole selon l'une au moins des revendications 1 à 9, caractérisée en ce que les organes télescopiques (25, 29) comportent des butées limitant l'allongement.
